# EUROPÄISCHE PATENTSCHRIFT

(11) **EP 0 935 122 B1**
(45) Veröffentlichungstag und Bekanntmachung des Hinweises auf die Patenterteilung: **19.01.2005**
(21) Anmeldenummer: 99100975.4
(22) Anmeldetag: 21.01.1999
(51) Int. Cl.: G01C 21/20, G09B 29/10, G08G 1/0969

(54) **Fahrzeugleitvorrichtung mit Fahrstreckenabtastung**
Vehicle guidance device with travel route scanning
Dispositif de guidage de véhicule à balayage de parcours

(30) Priorität: 27.01.1998 FR 9800848
(43) Veröffentlichungstag der Anmeldung: 11.08.1999
(73) Patentinhaber: Siemens Aktiengesellschaft, 80333 München (DE)
(72) Erfinder: Boyer, Jean Philippe, 78150 Le Chesnay (FR)

(56) Entgegenhaltungen:
- DE-A- 19 537 255
- PATENT ABSTRACTS OF JAPAN vol. 012, no. 300 (P-745), 16. August 1988 (1988-08-16) & JP 63 073111 A (MATSUSHITA ELECTRIC IND CO LTD), 2. April 1988 (1988-04-02)
- PATENT ABSTRACTS OF JAPAN vol. 097, no. 007, 31. Juli 1997 (1997-07-31) & JP 09 062185 A (DENSO CORP), 7. März 1997 (1997-03-07)
- PATENT ABSTRACTS OF JAPAN vol. 095, no. 003, 28. April 1995 (1995-04-28) & JP 06 331367 A (SUMITOMO ELECTRIC IND LTD), 2. Dezember 1994 (1994-12-02)

## Beschreibung

Diese Erfindung bezieht sich auf eine Fahrzeugleitvorrichtung mit einem Display, auf dem u.a. ein bestimmter Ausschnitt einer Karte angezeigt werden kann, einer Erfassungs- und Bedienungseinheit, um u.a. einen Anzeigemaßstab auszuwählen und eine Fahrstreckenabtastung abzurufen, und einem Prozessor mit Software zur Steuerung der Anzeige und u.a. zur Bestimmung des angezeigten Kartenausschnitts sowie mit Befehlen zur Bewegung des angezeigten Kartenausschnitts von einem Startpunkt bis zu einem Zielpunkt.

Sie bezieht sich ebenfalls auf ein Verfahren zur Verwirklichung einer Fahrstreckenabtastung während eines Fahrzeugleitprozesses, durch das ein bestimmter Ausschnitt einer Karte auf einem Display angezeigt, ein Anzeigemaßstab ausgewählt und der angezeigte Kartenausschnitt von einem Startpunkt bis zu einem Zielpunkt bewegt wird.

Eine Fahrzeugleitvorrichtung gemäß der obigen Einleitung ist aus dem Dokument DE-OS 195 16 647 (BMW) bekannt. Diesem Dokument zufolge wird der dargestellte Kartenausschnitt entsprechend der Fahrzeugbewegung verschoben und der Maßstab automatisch vergrößert, wenn die Fahrzeuggeschwindigkeit abnimmt.

Ein Gegenstand der Erfindung ist die Optimierung des Ablaufs einer Fahrstreckenabtastung.

Dazu enthält die Software darüber hinaus Befehle, durch die die Abtastgeschwindigkeit des angezeigten Kartenausschnitts unabhängig von der Position des Fahrzeugs entsprechend dem bei der Abfahrt aufgerufenen Anzeigemaßstab und der gesamten abzutastenden Entfernung eingestellt werden kann, sowie Befehle zur Änderung des Maßstabs in Abhängigkeit von der augenblicklichen Abtastgeschwindigkeit.

Besondere Ausführungsarten der Vorrichtung ergeben sich aus den abhängigen Ansprüchen 2 bis 5.

Nach dem Verfahren der Erfindung wird der angezeigte Kartenausschnitt unabhängig von der Position des Fahrzeugs mit einer Geschwindigkeit bewegt, die von dem bei der Abfahrt aufgerufenen Anzeigemaßstab und der während der Abtastung abzutastenden Entfernung abhängig ist. Außerdem wird der Maßstab stetig entsprechend der Abtastgeschwindigkeit geregelt.

Besondere Anwendungsarten des Verfahrens ergeben sich aus den abhängigen Ansprüchen 7 bis 10.

Diese Aspekte der Erfindung sowie weitere spezifischere Aspekte werden durch die nachfolgende Beschreibung einer Ausführungsart verdeutlicht, die ein nicht einschränkendes Beispiel darstellt.
Figur 1 stellt schematisch eine erfindungsgemäße Vorrichtung dar.
Figur 2 veranschaulicht die Änderung der Abtästgeschwindigkeit und des Kartenmaßstabs während der Abtastung einer Fahrstrecke.

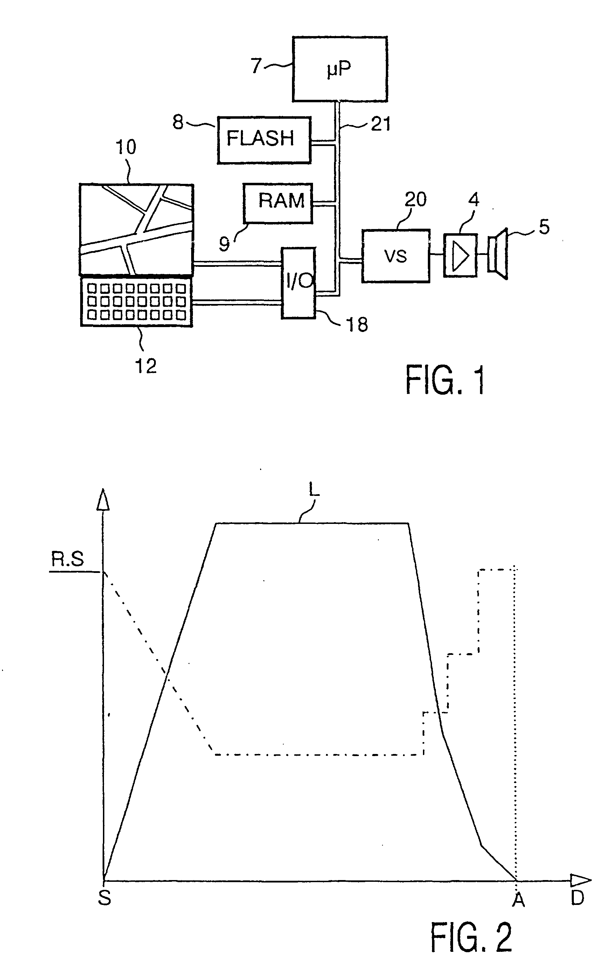

Die Vorrichtung von Figur 1 verfügt über einen Prozessor 7 mit Software zur Erzeugung von Steuersignalen und zur Verarbeitung der Signale aus verschiedenen Vorrichtungen, an die er über einen Bus 21 angeschlossen ist. Sie hat weiterhin mehrere Speicher: einen flüchtigen sogenannten RAM-Speicher 9 zum Speichern von zeitweilig gültigen Daten, einen nichtflüchtigen Speicher 8, z.B. einen sogenannten Flash, der gegebenenfalls mit einem Laufwerk zum Lesen einer CD, einer sogenannten CD-ROM, verbunden ist, zum Speichern einmalig festgeschriebener Beschreibungen. Der Speicher 8 ist u.a. zum Speichern geographischer Daten bestimmt.

Die Vorrichtung verfügt über Mittel zur Information eines Benutzers, hier ein Audio-Verstärkersystem 4 mit nachgeschaltetem Lautsprecher 5, zur Übermittlung akustischer Meldungen, und eine Ein-/Ausgangsschnittstelle 18, die mit einem Display 10, z.B. einem LCD-Display, zur Anzeige von Plänen oder Karten und schriftlichen Meldungen verbunden ist. Zur Gewährleistung der Interaktivität mit dem Benutzer ist die Ein-/Ausgangsschnittstelle 18 mit einer Bedienungstastatur 12 verbunden, die eine Datenerfassungseinheit darstellt, über die vom Benutzer u.a. eine Fahrstreckenabtastung aufgerufen werden kann.

Die Anzeige eines Videobildes macht ein festes Auffrischintervall erforderlich. Als Bild wird das Ergebnis jeder Auffrischung und als Kartenausschnitt ein durch ein Bild dargestellter Teil einer geographischen Karte bezeichnet. Die fließende, d.h. gleitende, Wiedergabe einer Bewegung eines Kartenausschnitts, wenn dieser Teil von einem Bild zum nächsten bewegt wird, setzt voraus, daß der Kartenausschnitt höchstens um eine maximale Bildpunktzahl N bewegt wird, so daß eine Bewegung auf der Karte einwandfrei verfolgt werden kann. Diese Zahl N ist von der Bildzahl je Sekunde und von der Integrationszeit des Auges abhängig.

Soll die Bewegungsgeschwindigkeit unter Wahrung dieser Regel erhöht werden, besteht eine Lösung darin, die Auffrischgeschwindigkeit v der Bilder und/oder die Einheitsbewegung X, d.h. die Menge der Bildpunkte, um die der Kartenausschnitt von einem Bild zum anderen verschoben wird, zu erhöhen, sofern X kleiner als N bleibt. Die Höchstgeschwindigkeit Vₘₐₓ, ausgedrückt in Anzahl der Bildpunkte je Sekunde, wird stets durch die Beziehung Vₘₐₓ ≤ N/v vorgegeben. Es ist klar, daß bei einer gegebenen Geschwindigkeit, ausgedrückt in geographischen Koordinaten, die Abtastgeschwindigkeit des angezeigten Kartenausschnitts, ausgedrückt in Bildpunkten, vom Maßstab abhängt.

Eine Fahrstreckenabtastung besteht darin, ausgehend von einem Ausgangskartenausschnitt einen Zielkartenausschnitt zu erreichen, wobei zwischen dem Ausgangskartenausschnitt und dem Zielkartenausschnitt aufeinanderfolgende Verschiebungen ausgeführt werden. Die Zeit zwischen dem Beginn der Abtastung und ihrem Ende muß angemessen kurz sein. Dieser relative Begriff hängt von der Entfernung zwischen Startpunkt und Zielpunkt sowie vom Maßstab ab, in dem die Karte dargestellt wird. Dabei gilt bekanntlich, daß ein Maßstab umso größer ist, je größer die Gegenstände dargestellt werden.

Bleibt der Maßstab während der Abtastung unverändert, wird die Bewegung in Bildpunkten pro Bild entsprechend den obigen Überlegungen begrenzt, so daß N nicht überschritten wird, und für die gesamte Abtastung so eine Mindestzeit t vorgegeben, die möglicherweise zu lang ist.

Um dieses Problem zu lösen, steuert die Software der Vorrichtung den Maßstab in Abhängigkeit von der gewünschten Abtastgeschwindigkeit. Der Maßstab bei der Abfahrt wurde vom Benutzer gewählt. Am Ende der Abtastung sollte wieder der gleiche Maßstab hergestellt werden. Die Software berechnet also die Höchstgeschwindigkeit, die sogenannte Normalgeschwindigkeit, die zur Erreichung einer kurzen Abtastzeit wünschenswert ist, und bewegt dann den Kartenausschnitt von einem bestimmten Anfangsmaßstab an immer schneller (in geographischen Koordinaten), wobei der Maßstab gleichzeitig verkleinert wird, bis nach Ablauf einer vorbestimmten Zeit ein Maßstab erreicht wird, der mit der Normalgeschwindigkeit kompatibel ist, d.h. bei dem die Geschwindigkeit, ausgedrückt in Anzahl der Bildpunkte je Sekunde, die oben angegebene Höchstgeschwindigkeit ist. Anschließend führt sie den mittleren Teil der Abtastung bei konstanter Geschwindigkeit mit dem kompatiblen Maßstab aus und beendet dann die Abtastung des Kartenausschnitts unter Verlangsamung (in geographischen Koordinaten) der Bewegung des Kartenausschnitts und erneuter Änderung des Maßstabs in den Anfangsmaßstab. In gewisser Weise wird der Maßstab während der Abtastung so verändert, daß die in Bildpunkten ausgedrückte Geschwindigkeit nahezu konstant bleibt, während sich die Geschwindigkeit in geographischen Koordinaten verändert.

Ein Beispiel des so genutzten Geschwindigkeit-Maßstab-Paares wird in Figur 2 gezeigt, in der die Abszisse die geographische Position D des Mittelpunkts des angezeigten Kartenausschnitts darstellt. Der angezeigte Kartenausschnitt wird von einem Startpunkt S bis zu einem Zielpunkt A mit der Geschwindigkeit (in geographischen Koordinaten) bewegt, die durch die Vollstrichkurve angegeben wird. Die Höhe des beim Höchstwert dieser Geschwindigkeit erreichten Plateaus L ist von der Zeit abhängig, die für die gesamte Abtastung des angezeigten Kartenausschnitts vom Startpunkt bis zum Zielpunkt erforderlich ist, wobei diese Zeit z.B. vom Benutzer über die Bedienungstastatur eingegeben wird oder im System vorbestimmt ist. Der Anzeigemaßstab wird entsprechend der strichpunktierten Kurve in Abhängigkeit von der geographischen Position des angezeigten Kartenausschnitts verändert. Der Wert dieses Maßstabs ist vor allem von dem bei der Abfahrt aufgerufenen Maßstab R.S, von der während der Abtastung abzutastenden Entfernung S-A und vom Höchstwert L der Geschwindigkeit abhängig, der seinerseits von der für den Vorgang gewünschten Dauer abhängig ist.

Zu Beginn verläuft die Verkleinerung des Maßstabs linear und proportional zur Zunahme der Geschwindigkeit. Am Schluß wurde ein weiteres Verfahren gewählt, nach dem der Maßstab stufenweise immer dann nach oben verändert wird, wenn die Geschwindigkeit nach unten eine vorbestimmte Schwelle überschreitet. Bei jeder Maßstabsänderung wird der Abfall der Geschwindigkeitskurve kleiner. Natürlich können diese Kurven nach Belieben verändert werden: Z.B. kann die Kurve für die Geschwindigkeitszunahme symmetrisch zur Kurve für die Verkleinerung verlaufen oder umgekehrt; ebenso könnte die Form der Maßstabskurve Stufen auf beiden Seiten oder aber eine proportionale Zunahme/Abnahme auf beiden Seiten aufweisen oder aber die Abfälle könnten größer oder kleiner sein usw.

## Patentansprüche

1. Fahrzeugleitvorrichtung mit einem Display, auf dem u.a. ein bestimmter Ausschnitt einer Karte angezeigt werden kann, einer Erfassungs- und Bedienungseinheit, um u.a. einen Anzeigemaßstab auszuwählen und eine Fahrstreckenabtastung abzurufen, und einem Prozessor mit Software zur Steuerung der Anzeige und u.a. zur Bestimmung des angezeigten Kartenausschnitts sowie mit Befehlen zur Bewegung des angezeigten Kartenausschnitts von einem Startpunkt bis zu einem Zielpunkt,
**dadurch gekennzeichnet, daß** die Software darüber hinaus Befehle, durch die die Abtastgeschwindigkeit des angezeigten Kartenausschnitts entsprechend dem bei der Abfahrt aufgerufenen Anzeigemaßstab und der gesamten abzutastenden Entfernung eingestellt werden kann, sowie Befehle zur Änderung des Maßstabs in Abhängigkeit von der augenblicklichen Abtastgeschwindigkeit enthält.

2. Fahrzeugleitvorrichtung nach Anspruch 1,
**dadurch gekennzeichnet, daß** die Software Befehle, um die zur Erreichung einer kurzen Abtastzeit wünschenswerte Höchstgeschwindigkeit, die sogenannte Normalgeschwindigkeit, zu berechnen, Befehle, um den Kartenausschnitt ausgehend von einem bestimmten Maßstab mit einer zunehmenden Geschwindigkeit so zu bewegen, daß nach einer vorbestimmten Zeit die Normalgeschwindigkeit erreicht wird, Befehle, um den mittleren Teil der Abtastung bei Normalgeschwindigkeit zu realisieren, sowie Befehle, um die Abtastung des Kartenausschnitts unter Verringerung der Geschwindigkeit zu beenden, enthält.

3. Fahrzeugleitvorrichtung nach Anspruch 2,
**dadurch gekennzeichnet, daß** die Software Befehle, um die zur Erreichung einer kurzen Abtastzeit wünschenswerte Höchstgeschwindigkeit, die sogenannte Normalgeschwindigkeit, zu berechnen, Befehle, um den Kartenausschnitt ausgehend von einem bestimmten Maßstab mit zunehmender Geschwindigkeit so zu bewegen, daß nach einer vorbestimmten Zeit die Normalgeschwindigkeit erreicht wird, wobei der Maßstab verändert wird, damit nach der gleichen Zeit ein mit der Normalgeschwindigkeit kompatibler Maßstab erreicht wird, Befehle, um den mittleren Teil der Abtastung bei Normalgeschwindigkeit mit dem kompatiblen Maßstab zu realisieren, sowie Befehle, um die Abtastung des Kartenausschnitts zu beenden, wobei die Geschwindigkeit und der Maßstab erneut geändert werden, um wieder zum Anfangsmaßstab zurückzugelangen, enthält.

4. Fahrzeugleitvorrichtung nach Anspruch 3,
**dadurch gekennzeichnet, daß** die Software Befehle enthält, um den Maßstab stufenweise zu ändern und um diesen immer dann zu vergrößern, wenn die Geschwindigkeit eine vorbestimmte Schwelle nach unten überschreitet.

5. Fahrzeugleitvorrichtung nach Anspruch 3,
**dadurch gekennzeichnet, daß** die Software Befehle enthält, um den Maßstab allmählich in Abhängigkeit von der Geschwindigkeit zu ändern.

6. Verfahren zur Verwirklichung einer Fahrstreckenabtastung während eines Fahrzeugleitprozesses, durch das ein bestimmter Ausschnitt einer Karte auf einem Display angezeigt, ein Anzeigemaßstab ausgewählt und der angezeigte Kartenausschnitt von einem Startpunkt bis zu einem Zielpunkt bewegt wird,
**dadurch gekennzeichnet, daß** der angezeigte Kartenausschnitt unabhängig von der Position des Fahrzeugs mit einer Geschwindigkeit bewegt wird, die von dem bei der Abfahrt aufgerufenen Anzeigemaßstab und von der während der Abtastung abzutastenden Entfernung abhängig ist, und der Maßstab stetig entsprechend der Abtastgeschwindigkeit geregelt wird.

7. Fahrzeugleitverfahren nach Anspruch 6,
**dadurch gekennzeichnet, daß** zunächst die zur Erzielung einer kurzen Abtastzeit wünschenswerte Höchstgeschwindigkeit, die sogenannte Normalgeschwindigkeit, berechnet wird, dann der Kartenausschnitt ausgehend von einem bestimmten Maßstab mit zunehmender Geschwindigkeit so bewegt wird, daß nach einer vorbestimmten Zeit die Normalgeschwindigkeit erreicht wird, der mittlere Teil der Abtastung bei Normalgeschwindigkeit verwirklicht wird und die Abtastung des Kartenausschnitts unter Verringerung der Geschwindigkeit beendet wird.

8. Fahrzeugleitverfahren nach Anspruch 7,
**dadurch gekennzeichnet, daß** zunächst die zur Erzielung einer kurzen Abtastzeit wünschenswerte Höchstgeschwindigkeit, die sogenannte Normalgeschwindigkeit, berechnet wird, dann ausgehend von einem bestimmten Maßstab der Kartenausschnitt mit zunehmender Geschwindigkeit so bewegt wird, daß nach einer vorbestimmten Zeit die Normalgeschwindigkeit erreicht wird, wobei der Maßstab geändert wird, um nach der gleichen Zeit einen mit der Normalgeschwindigkeit kompatiblen Maßstab zu erzielen, der mittlere Teil der Abtastung bei Normalgeschwindigkeit mit dem kompatiblen Maßstab realisiert wird und die Abtastung des Kartenausschnitts beendet wird, wobei die Geschwindigkeit und der Maßstab erneut geändert werden, um zum Anfangsmaßstab zurückzukehren.

9. Fahrzeugleitverfahren nach Anspruch 8,
**dadurch gekennzeichnet, daß** die Software Befehle enthält, um den Maßstab stufenweise zu ändern und um diesen immer dann zu vergrößern, wenn die Geschwindigkeit einen vorbestimmten Schwellenwert nach unten überschreitet.

10. Fahrzeugleitverfahren nach Anspruch 8,
**dadurch gekennzeichnet, daß** die Software Befehle enthält, um den Maßstab allmählich in Abhängigkeit von der Geschwindigkeit zu ändern.

## Claims

1. Vehicle guidance apparatus having a display, on which, inter alia, a particular detail from a map can be displayed, a capture and control unit for the purpose of, inter alia, selecting a display scale and retrieving a route scan, and a processor with software for controlling the display and, inter alia, for determining the displayed map detail and also with commands for moving the displayed map detail from a starting point to a destination,
**characterized in that** the software additionally contains commands which can set the scanning speed for the displayed map detail in line with the display scale called up upon departure and the total distance which is to be scanned, and also commands for changing the scale on the basis of the current scanning speed.

2. Vehicle guidance apparatus according to Claim 1,
**characterized in that** the software contains commands for calculating the maximum speed which is desirable for achieving a short scanning time, the "normal speed", commands for moving the map detail at an increasing speed starting from a particular scale such that the normal speed is reached after a predetermined time, commands for implementing the mean part of the scan at normal speed, and commands for ending the scan of the map detail by reducing the speed.

3. Vehicle guidance apparatus according to Claim 2,
**characterized in that** the software contains commands for calculating the maximum speed which is desirable for achieving a short scanning time, the "normal speed", commands for moving the map detail at increasing speed starting from a particular scale such that the normal speed is reached after a predetermined time, the scale being altered so that a scale which is compatible with the normal speed is reached after the same time, commands for implementing the mean part of the scan at normal speed with the compatible scale, and commands for ending the scan of the map detail, the speed and the scale being changed again in order to return to the initial scale again.

4. Vehicle guidance apparatus according to Claim 3,
**characterized in that** the software contains commands for changing the scale in stages and for increasing the size of the scale whenever the speed exceeds a predetermined lower threshold.

5. Vehicle guidance apparatus according to Claim 3,
**characterized in that** the software contains commands for changing the scale gradually on the basis of the speed.

6. Method for carrying out a route scan during a vehicle guidance process, which displays a particular detail of a map on a display, selects a display scale and moves the displayed map detail from a starting point to a destination,
**characterized in that** the displayed map detail is moved, regardless of the position of the vehicle, at a speed which is dependent on the display scale called up upon departure and on the distance to be scanned during the scan, and the scale is continually regulated in line with the scanning speed.

7. Vehicle guidance method according to Claim 6,
**characterized in that** first the maximum speed which is desirable for achieving a short scanning time, the "normal speed", is calculated, then the map detail is moved at increasing speed starting from a particular scale such that the normal speed is reached after a predetermined time, the mean part of the scan is carried out at normal speed, and the scan of the map detail is ended by reducing the speed.

8. Vehicle guidance method according to Claim 7,
**characterized in that** first the maximum speed which is desirable for achieving a short scanning time, the "normal speed", is calculated, then the map detail is moved at increasing speed starting from a particular scale such that the normal speed is reached after a predetermined time, the scale being changed in order to reach a scale which is compatible with the normal speed after the same time, the mean part of the scan is implemented at normal speed with the compatible scale, and the scan of the map detail is ended, the speed and the scale being changed again in order to return to the initial scale.

9. Vehicle guidance method according to Claim 8,
**characterized in that** the software contains commands for changing the scale in stages and for increasing the size of the scale whenever the speed exceeds a predetermined lower threshold value.

10. Vehicle guidance method according to Claim 8,
**characterized in that** the software contains commands for changing the scale gradually on the basis of the speed.

## Revendications

1. Dispositif de guidage de véhicule comportant un écran, sur lequel on peut afficher, entre autres, un extrait déterminé d'une carte, une unité de saisie et de commande, permettant, entre autres, de sélectionner une échelle d'affichage et d'appeler un balayage de parcours, et un processeur avec du logiciel, permettant de contrôler l'affichage et, entre autres, de déterminer l'extrait de carte affiché, ainsi que des instructions, permettant de déplacer l'extrait de carte affiché entre un point de départ et un point de destination
**caractérisé par le fait que** le logiciel renferme, en outre, des instructions, grâce auxquelles il est possible de régler la vitesse de balayage de l'extrait de carte affiché en fonction de l'échelle d'affichage appelée au moment du départ et de l'ensemble de la distance à balayer, ainsi que des instructions permettant de modifier l'échelle en fonction de la vitesse momentanée de balayage.

2. Dispositif de guidage de véhicule selon la revendication 1
**caractérisé par le fait que** le logiciel renferme des instructions permettant de calculer la vitesse maximum souhaitable pour parvenir à un temps de balayage court, vitesse dite vitesse normale, des instructions pour déplacer, avec une vitesse qui augmente, l'extrait de carte, en partant d'une échelle déterminée, de telle manière que, après un temps fixé au préalable, on parvienne à la vitesse normale, des instructions permettant de réaliser la partie centrale du balayage à vitesse normale, ainsi que des instructions permettant de terminer le balayage de l'extrait de carte tout en diminuant la vitesse.

3. Dispositif de guidage de véhicule selon la revendication 2
**caractérisé par le fait que** le logiciel renferme des instructions permettant de calculer la vitesse maximum souhaitable pour parvenir à un temps de balayage court, vitesse dite vitesse normale, des instructions pour déplacer, avec une vitesse qui augmente, l'extrait de carte, en partant d'une échelle déterminée, de telle manière que, après un temps fixé au préalable, on parvienne à la vitesse normale, l'échelle étant modifiée pour que, après le même temps, on parvienne à une échelle compatible avec la vitesse normale, des i nstructions permettant de réaliser la partie centrale du balayage à vitesse normale avec l'échelle compatible, ainsi que des instructions permettant de terminer le balayage de l'extrait de carte, la vitesse et l'échelle étant de nouveau modifiées afin de revenir à l'échelle du départ.

4. Dispositif de guidage de véhicule selon la revendication 3
**caractérisé par le fait que** le logiciel renferme des instructions permettant de modifier l'échelle pas à pas et d'augmenter celle-ci lorsque la vitesse dépasse vers le bas un seuil prédéterminé.

5. Dispositif de guidage de véhicule selon la revendication 3
**caractérisé par le fait que** le logiciel renferme des instructions permettant de modifier l'échelle graduellement en fonction de la vitesse.

6. Méthode permettant de réaliser un balayage de trajet pendant un processus de guidage de véhicule, grâce à laquelle un extrait déterminé d'une carte est affiché sur un écran, une échelle d'affichage est sélectionnée et l'extrait de carte affiché est déplacé depuis un point de départ jusqu'à un point de destination,
**caractérisée par le fait que** l'extrait de carte affiché est déplacé en fonction de la position du véhicule avec une vitesse qui dépend de l'échelle d'affichage appelée lors du départ et de la distance à balayer pendant le balayage et que l'échelle est réglée d'une façon continue en fonction de la vitesse de balayage.

7. Méthode de guidage de véhicule selon la revendication 6
**caractérisée par le fait que**, d'abord, la vitesse maximum souhaitable pour parvenir à un temps de balayage court, vitesse dite vitesse normale, est calculée, puis l'extrait de carte est déplacé, en partant d'une échelle déterminée, avec une vitesse qui augmente, de telle manière que, après un temps prédéterminé, on parvienne à la vitesse normale, que la partie centrale du balayage soit réalisée à vitesse normale et que le balayage de l'extrait de carte se termine en diminuant la vitesse.

8. Méthode de guidage de véhicule selon la revendication 7
**caractérisée par le fait que**, d'abord, la vitesse maximum souhaitable pour parvenir à un temps de balayage court, vitesse dite vitesse normale, est calculée, puis l'extrait de carte est déplacé, en partant d'une échelle déterminée, avec une vitesse qui augmente, de telle manière que, après un temps prédéterminé, on parvienne à
la vitesse normale, l'échelle étant modifiée pour parvenir, après le même temps, à une échelle compatible avec la vitesse normale, la partie centrale du balayage étant réalisée à vitesse normale avec l'échelle compatible et le balayage de l'extrait de carte étant terminé tout en modifiant de nouveau la vitesse et l'échelle pour revenir à l'échelle du départ.

9. Méthode de guidage de véhicule selon la revendication 8
**caractérisée par le fait que** le logiciel renferme des instructions permettant de modifier l'échelle pas à pas et d'agrandir celle-ci lorsque la vitesse dépasse vers le bas une valeur seuil déterminée au préalable.

10. Méthode de guidage de véhicule selon la revendication 8
**caractérisée par le fait que** le logiciel renferme des instructions permettant de modifier l'échelle graduellement en fonction de la vitesse.
